# EUROPÄISCHE PATENTSCHRIFT

(11) **EP 2 955 094 B1**
(45) Veröffentlichungstag und Bekanntmachung des Hinweises auf die Patenterteilung: **14.06.2017**
(21) Anmeldenummer: 15164199.0
(22) Anmeldetag: 20.04.2015
(51) Int. Cl.: B62M 6/45

(54) **FORTBEWEGUNGSMITTEL, INSBESONDERE ELEKTROFAHRRAD, MIT BATTERIELOSER STARTEINRICHTUNG**
MEANS OF LOCOMOTION, IN PARTICULAR ELECTRIC BICYCLE, WITH BATTERYLESS STARTER DEVICE
MOYEN DE TRANSPORT, EN PARTICULIER VÉLO ÉLECTRIQUE, DOTÉ D'UN DISPOSITIF DE DÉMARRAGE SANS BATTERIE

(30) Priorität: 13.06.2014 DE 102014211306
(43) Veröffentlichungstag der Anmeldung: 16.12.2015
(73) Patentinhaber: ROBERT BOSCH GMBH, 70442 Stuttgart (DE)
(72) Erfinder: Greiner, Rinaldo, 72762 Reutlingen (DE); Schueler, Jochen, 72144 Dusslingen (DE)

(56) Entgegenhaltungen:
- EP-A1- 1 306 817
- EP-A1- 1 733 963
- EP-A2- 1 188 660
- WO-A1-2011/120124
- JP-A- 2004 201 376
- US-A1- 2007 281 828
- US-A1- 2014 035 356

## Beschreibung

### Stand der Technik

Die vorliegende Erfindung betrifft ein mit Muskelkraft und/oder elektrisch betreibbares Fortbewegungsmittel, insbesondere ein Elektrofahrrad, umfassend eine batterielose Starteinrichtung für einen Systemstart, beansprucht im Anspruch 1, und eine batterielose Starteinrichtung, beansprucht im Anspruch 9. Mit Muskelkraft und/oder elektrisch betreibbare Fortbewegungsmittel, beispielsweise Elektrofahrräder, werden in jüngster Zeit verstärkt nachgefragt. Derartige Elektrofahrräder umfassen einen elektrischen Antrieb, einen Akkumulator und eine Steuereinheit, welche eingerichtet ist, den elektrischen Antrieb in Abhängigkeit von verschiedensten Fahrparametern und/oder nach Wunsch des Fahrers anzutreiben. Zum Systemstart ist üblicherweise am Lenker in einer Anzeigeeinheit ein Startknopf vorgesehen, welcher über eine in der Anzeigeeinheit angeordnete separate Batterie versorgt wird. Somit umfasst dieses System zwei Batterien, nämlich eine kleine Batterie mit geringer Kapazität zum Systemstart und eine große Batterie (Akkumulator) mit großer Kapazität zur Versorgung des elektrischen Antriebs. Alternativ sind Systeme bekannt, bei denen ein sog. Startknopf durch die Hauptbatterie, welche eigentlich zum Antreiben des elektrischen Antriebs vorgesehen ist, versorgt werden. Hierbei ist jedoch eine konstante Energieaufnahme durch den Startknopf oder dgl. vorhanden, was bei einer längeren Nichtbenutzung des Elektrofahrrads zu einem Entladen der Hauptbatterie führt. Es wäre daher wünschenswert, eine alternative Lösung des Problemkreises "Systemstart" bei Elektrofahrrädern oder dgl. zu haben. Die EP-A-1 188 660, die als nächstliegender stand der Technik angesehen wird, offenbart ein mit Muskelkraft und/oder elektrisch betreibbares Fortbewegungsmittel, insbesondere Elektrofahrrad, umfassend: - ein Antriebssystem mit einer Steuereinheit, einem elektrischen Antrieb und einem Akkumulator,
- eine Starteinrichtung zum Starten des Antriebssystems, wobei die Starteinrichtung eingerichtet ist, bei einem Startwunsch für einen Systemstart ein Startsignal zu erzeugen,
- wobei die Starteinrichtung einen mehrstufigen Systemstart mit wenigstens einer ersten Stufe und einer zweiten Stufe ermöglicht, und
- wobei in der ersten Stufe ein erstes Startsignal für eine erste Einrichtung erzeugbar ist und in der zweiten Stufe ein zweites Startsignal für eine zweite Einrichtung erzeugbar ist.

Die EP-A-1 188 660 offenbart auch eine Starteinrichtung zum Starten des Antriebssystems, wobei die Starteinrichtung eingerichtet ist, bei einem Startwunsch für einen Systemstart ein Startsignal zu erzeugen, wobei die Starteinrichtung einen mehrstufigen Systemstart mit wenigstens einer ersten Stufe und einer zweiten Stufe ermöglicht, und wobei in der ersten Stufe ein erstes Startsignal für eine erste Einrichtung erzeugbar ist und in der zweiten Stufe ein zweites Startsignal für eine zweite Einrichtung erzeugbar ist.

### Offenbarung der Erfindung

Das erfindungsgemäße mit Muskelkraft und/oder elektrisch betreibbare Fortbewegungsmittel, insbesondere Elektrofahrrad, mit den Merkmalen des Anspruchs 1 weist demgegenüber den Vorteil auf, dass für einen Systemstart des elektrischen Antriebssystems keine im Antriebssystem gespeicherte Energie notwendig ist. Der Systemstart kann batterielos und energieautark erfolgen. Hierzu ist erfindungsgemäß eine batterielose Starteinrichtung vorgesehen, welche eingerichtet ist, bei einem Startwunsch eines Fahrers Umgebungsenergie zur Erzeugung eines Startsignals zu verwenden. Die erfindungsgemäße Starteinrichtung ist dabei derart aufgebaut, dass ein mehrstufiger Systemstart mit wenigstens einer ersten und zweiten Stufe möglich ist. In einer ersten Stufe wird dabei ein erstes Startsignal für eine erste Einrichtung erzeugt und in einer zweiten Stufe wird ein zweites Startsignal für eine zweite Einrichtung erzeugt, welche unterschiedlich zur ersten Einrichtung ist. Beispielsweise dient die erste Stufe zum Systemstart und die zweite Stufe dient beispielsweise zum Einschalten eines Lichts am Fortbewegungsmittel. Somit kann erfindungsgemäß ein von einem Akkumulator am Fortbewegungsmittel unabhängiger Systemstart ausgeführt werden, so dass weder zwei Batterien noch eine ständige Versorgung eines Startknopfes oder dgl. durch eine Hauptbatterie des elektrisch betreibbaren Fortbewegungsmittels notwendig ist.
Die Unteransprüche zeigen bevorzugte Weiterbildungen der Erfindung.
Besonders bevorzugt umfasst die batterielose Starteinrichtung einen Taster. Durch Vorsehen eines Tasters kann durch Drücken des Tasters Umgebungsenergie zur Erzeugung des Startsignals verwendet werden. Hierdurch kann ein besonders einfacher und kompakter Aufbau ermöglicht werden.

Die batterielose Starteinrichtung umfasst erfindungsgemäss wenigstens einen ersten und einen zweiten mechanischen Widerstand. Dabei ist der erste mechanische Widerstand der ersten Stufe des Systemstarts zugeordnet und der zweite mechanische Widerstand ist der zweiten Stufe des Systemstarts zugeordnet. Somit kann dem Fahrer, welcher z.B. den Taster bzw. Druckknopf drückt, durch das Vorsehen der beiden mechanischen Widerstände eine haptische Rückkopplung für den Start der beiden Stufen gegeben werden, z.B. durch einen steigenden mechanischen Widerstand bei Erreichen der zweiten Stufe.

Weiter bevorzugt umfasst die batterielose Starteinrichtung eine Spulenanordnung, welche eingerichtet ist, bei Drücken, d.h., Bewegung z.B. eines Tasterelements, ein Startsignal zu erzeugen und an eine Steuereinheit oder dgl. zu übermitteln. Die batterielose Starteinrichtung umfasst besonders bevorzugt eine erste Spule, welche um einen ersten Ferritkern angeordnet ist, sowie ein Permanentmagnetelement, welches mit dem vom Fahrer zu betätigten Taster oder dgl. in Verbindung steht und durch Bewegung des Permanentmagnetelements relativ zur ersten Spule ein elektrisches Startsignal erzeugbar ist. Für die zweite Spule ist vorzugsweise ein identischer Spulenaufbau vorgesehen.

Alternativ umfasst die batterielose Starteinrichtung ein Piezoelement, welches eingerichtet ist, unterschiedliche Signale zur Darstellung der verschiedenen Stufen des mehrstufigen Systemstarts bereitzustellen. Hierbei kann beispielsweise abhängig von einer über den Taster auf das Piezoelement ausgeübten Kraft verschiedene Signale nach Überschreiten verschiedener Kraftwerte am Piezoelement, welche als Schwellenwert dienen, erzeugt werden. Alternativ können auch mehrere Piezoelemente vorgesehen werden, auf welche z.B. entsprechend einer Eindrücktiefe des Tasters jeweils ein unterschiedliches Startsignal entsprechend den vorgesehenen Stufen bereitgestellt werden kann.

Weiter bevorzugt umfasst der Taster ein Rückstellelement, um den Taster in eine Ausgangsposition zurückzustellen. Das Rückstellelement kann beispielsweise als Feder oder dgl. ausgebildet sein.

Gemäß einer weiteren bevorzugten Ausgestaltung der vorliegenden Erfindung ist die batterielose Starteinrichtung am Fortbewegungsmittel angeordnet. Die batterielose Starteinrichtung ist dabei mit dem elektrischen Antriebssystem des Fortbewegungsmittels verbunden, um einem energieautarken Systemstart zu initiieren.

Besonders bevorzugt ist die batterielose Starteinrichtung in die Steuereinheit des elektrischen Antriebssystems integriert. Hierdurch kann ein besonders kompakter Aufbau realisiert werden. Üblicherweise umfasst die elektrische Antriebseinheit dabei eine Steuereinheit, welche beispielsweise im Fall eines Elektrofahrrads an einem Lenker angeordnet ist und als Schnittstelle zwischen dem Nutzer des Fortbewegungsmittels und dem elektrischen Antriebssystems dient. Alternativ ist die Starteinrichtung separat am Fortbewegungsmittel angeordnet, so dass eine Art "Startknopf" an beliebiger Position am Fortbewegungsmittel angeordnet werden kann. Hierdurch können insbesondere besondere bauliche Anordnungen am Fortbewegungsmittel berücksichtigt werden und der separate Startknopf beliebig positioniert werden.
Darüber hinaus soll mit der vorliegenden Erfindung auch die vorstehend beschriebene Starteinrichtung losgelöst von dem Fortbewegungsmittel beansprucht werden, siehe Anspruch 9. Neben den bereits ausgeführten Vorteilen kann die Starteinrichtung auch den jeweiligen Stufen zugeordnete Energieerzeugungsmittel aufweisen, z.B. in Form von Piezoelementen. Dabei ist optional vorgesehen, dass jede Stufe bzw. jedes Piezoelement die gleiche oder unterschiedliche Energiemengen erzeugt. Mit einer derartigen Energie selbsterzeugenden Starteinrichtung können Startsignale für die Stufen zur Verfügung gestellt werden, ohne dass von außen die (Ein-)Stellung der Starteinrichtung energetisch überwacht werden muss.

### Kurze Beschreibung der Zeichnungen

Nachfolgend werden Ausführungsbeispiele der Erfindung unter Bezugnahme auf die begleitende Zeichnung im Detail beschrieben. Gleiche bzw. funktional gleiche Teile sind dabei mit den gleichen Bezugszeichen bezeichnet. In der Zeichnung ist:
- Figur 1: eine schematische Darstellung eines Elektrofahrrads mit einer batterielosen Starteinrichtung gemäß einem ersten Ausführungsbeispiel der Erfindung,
- Figur 2: eine schematische, vergrößerte Darstellung der Starteinrichtung von Figur 1, und
- Figur 3: eine schematische, vergrößerte Darstellung einer Starteinrichtung gemäß einem zweiten Ausführungsbeispiel der Erfindung.

### Ausführungsformen der Erfindung

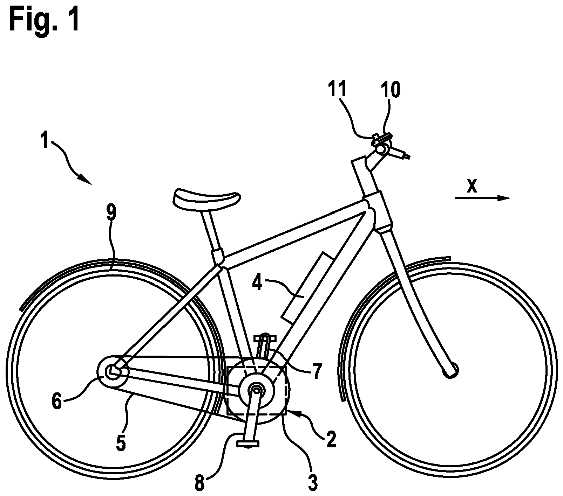

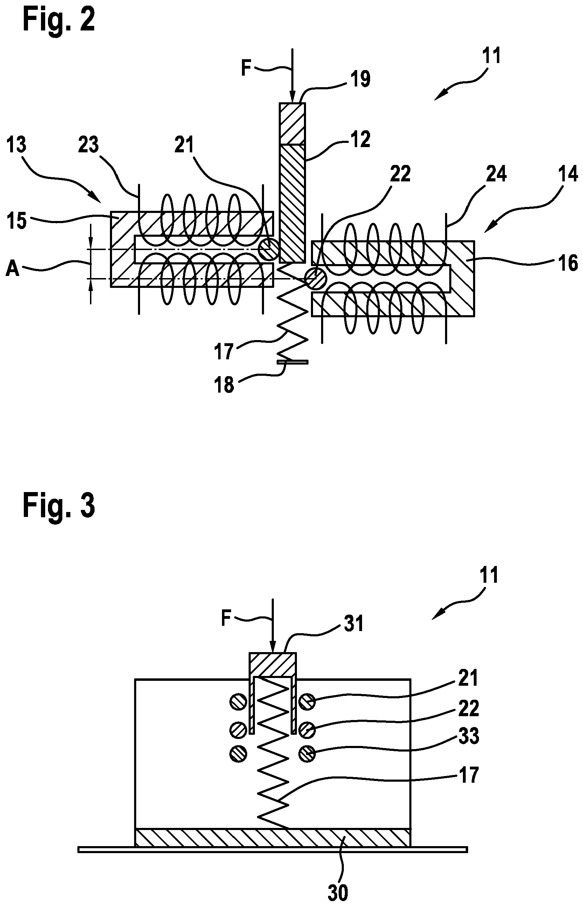

Nachfolgend wird unter Bezugnahme auf die Figuren 1 und 2 ein Elektrofahrrad 1 gemäß einem ersten bevorzugten Ausführungsbeispiel der Erfindung im Detail beschrieben.

Wie aus Figur 1 ersichtlich ist, umfasst das Elektrofahrrad 1 einen Kurbeltrieb 2 mit zwei Kurbeln 7, 8, an denen Pedale angeordnet sind. Ein elektrischer Antrieb 3 ist im Bereich des Kurbeltriebs angeordnet, so dass eine sog. Mittelmotoranordnung vorliegt. Über ein Kettenblatt am Kurbeltrieb 2 und eine Kette 5 werden Ritzel 6 an einem Hinterrad 9 des Elektrofahrrads angetrieben.

Am Lenker des Elektrofahrrads ist eine Steuereinheit 10 angeordnet, welche mit dem elektrischen Antrieb 3 und einem Akkumulator 4 verbunden ist.

Weiterhin ist eine batterielose Starteinrichtung 11, umfassend einen Taster 19, an der Steuereinheit 10 angeordnet. Das elektrische Antriebssystem des Elektrofahrrads umfasst somit nur einen einzigen Akkumulator 4, welcher zur Stromversorgung des elektrischen Antriebssystems vorgesehen ist. Die Starteinrichtung 11 ist dabei jedoch batterielos, wobei zur Erzeugung eines Startsignals für einen Systemstart Umgebungsenergie verwendet wird.

Figur 2 zeigt im Detail die Starteinrichtung 11. Als Umgebungsenergie wird dabei die durch ein Drücken des Tasters 19 vorhandene Bewegungsenergie benutzt. Dies wird erfindungsgemäß dadurch erreicht, dass der Taster 19 ein Permanentmagnetelement 12 umfasst, welches in Richtung des Pfeils F linear bewegbar ist. Die Starteinrichtung 11 umfasst ferner eine erste Spulenanordnung 13 mit einer ersten Spule 23 und eine zweite Spulenanordnung 14 mit einer zweiten Spule 24. Ein erster, U-förmiger Ferritkern 15 ist von der ersten Spule 23 umwickelt. Ein zweiter U-förmiger Ferritkern 16 ist von der zweiten Spule 24 umwickelt.

Weiterhin umfasst die Starteinrichtung 11 ein Rückstellelement 17 in Form einer Feder, wobei sich das Rückstellelement 17 mit einem Ende an einer Basis 18 und mit einem anderen Ende am Permanentmagnetelement 12 abstützt. Das Rückstellelement 17 stellt den Taster 19 und das Permanentmagnetelement 12 dabei wieder in eine Ausgangsposition zurück.

Ferner umfasst die Starteinrichtung 11 einen ersten mechanischen Widerstand 21 und einen zweiten mechanischen Widerstand 22. Der erste mechanische Widerstand 21 ist im Bereich des ersten Ferritkerns 15 angeordnet und der zweite mechanische Widerstand 22 ist im Bereich des zweiten Ferritkerns 16 angeordnet. Wie aus Figur 2 ersichtlich ist, sind die beiden mechanischen Widerstände 21, 22 in Bewegungsrichtung F etwas versetzt zueinander mit einem Abstand A angeordnet. Hierdurch wird ein mehrstufiger Systemstart erreicht, wobei der erste mechanische Widerstand 21 den Start der ersten Stufe, z.B. Einschalten des Antriebssystems, bewirkt und der zweite mechanische Widerstand 22 das Einschalten einer zweiten Einrichtung, beispielsweise eines zweiten Verbrauchers wie eines Vorderlichts oder dgl. bewirkt. Durch die beiden in Bewegungsrichtung versetzt zueinander angeordneten mechanischen Widerstände 21, 22 erhält ein Benutzer bei Drücken des Tasters 19 in Richtung des Pfeils F eine haptische Rückmeldung, da die Bewegung des Permanentmagnetelements 12, welches mit den mechanischen Widerständen nacheinander in Kontakt kommt, eine jeweils größere Betätigungskraft erfordert. Somit wird ein zweistufiger Taster bereitstellt, welcher über eine erhöhte Reibung des Permanentmagnetelements 12 bei Überstreichen des ersten bzw. zweiten mechanischen Widerstands 21, 22 jeweils das Gefühl des Zuschaltens einer weiteren Stufe ergibt.

Durch das Bewegen des Permanentmagnetelements 12 in Richtung des Pfeils F gegen die Kraft des Rückstellelements 17 schließt das Permanentmagnetelement 12 die beiden Spulenanordnungen 13, 14, so dass jeweils eine Spannung im System induziert wird. Durch die versetzte Anordnung wird zuerst die Spannung im ersten Ferritkern 15 induziert und anschließend nach Zurücklegen eines weiteren Wegstücks A die Spannung im zweiten Ferritkern 16 induziert.

Es sei angemerkt, dass in Figur 2 lediglich zwei Stufen dargestellt sind. Es ist jedoch auch möglich, entsprechend dem in Figur 2 gezeigten Aufbau weitere Stufen durch Versetzung in Bewegungsrichtung anzuordnen, so dass eine mehr als zweistufige Starteinrichtung ermöglicht wird.

Erfindungsgemäß kann somit die Starteinrichtung ohne das Vorsehen einer Batterie bzw. einer Verbindung zum Akkumulator 4 des Elektrofahrrads betrieben werden. Als Umgebungsenergie wird dabei die auf das Permanentmagnetelement 12 ausgeübte Kraft verwendet. Da dabei gleichzeitig auch das Rückstellelement 17 zusammengedrückt wird, erfolgt eine Rückstellung des Systems ebenfalls ohne externe Energie durch Entspannung des Federelements.

Figur 3 zeigt eine Starteinrichtung 11 gemäß einem zweiten Ausführungsbeispiel der Erfindung. Im Gegensatz zu den Spulenanordnungen umfasst die Starteinrichtung 11 des zweiten Ausführungsbeispiels ein Piezoelement 30. Ein Rückstellelement 17 ist zwischen einem Druckknopf 31 und dem Piezoelement 30 angeordnet. In diesem Ausführungsbeispiel ist eine dreistufige Starteinrichtung mit einem ersten mechanischen Widerstand 21, einem zweiten mechanischen Widerstand 22 und einem dritten mechanischen Widerstand 33 vorgesehen. Die mechanischen Widerstände 21, 22, 33 sind in Bewegungsrichtung (Pfeil F) des Druckknopfs 31 nacheinander angeordnet. Somit kann einem Nutzer eine dreistufe Ansteuerung suggeriert werden. Da der Druckknopf 31 gegen die Rückstellkraft des Rückstellelements 17 bewegt werden muss, muss eine größere Kraft auf den Druckknopf 31 ausgeübt werden, je weiter dieser eingedrückt wird. Dadurch erhöht sich die jeweils vom Piezoelement 30 erzeugte elektrische Spannung. Somit kann ein dreistufiger Systemstart bereitgestellt werden, wobei beispielsweise mittels der ersten Stufe (erster mechanischer Widerstand 21) ein Start des Antriebssystems initiiert wird, mittels der zweiten Stufe (zweiter mechanischer Widerstand 22) das Einschalten des Vorderlichts und mittels der dritten Stufe (dritter mechanischer Widerstand 33) das Einschalten des Rücklichts initiiert wird.

In den beschriebenen beiden Ausführungsbeispielen ist die Starteinrichtung 11 jeweils in die Steuereinheit 10 integriert. Es ist jedoch auch möglich, dass die Starteinrichtung 11 als separater "Startknopf" beliebig am Elektrofahrrad angeordnet wird. Somit kann für einen Nutzer eine klare Trennung zwischen der Steuereinheit und dem Startknopf ermöglicht werden. Eine Verbindung zwischen dem separaten Startknopf und der Steuereinheit 10 kann dann beispielsweise über einen CAN-Bus-System erreicht werden.

Hierbei ist es beispielsweise auch möglich, dass eine Bitfolge als Startsignal der Starteinrichtung übersandt wird.

Somit muss bei den erfindungsgemäßen, in den Ausführungsbeispielen beschriebenen Elektrofahrrädern lediglich eine einzige Batterie im Antriebssystem vorgesehen werden, so dass auch bei mehreren Startvorgängen bzw. bei einer längeren Nichtbenutzung des Elektrofahrrads kein teilweise oder vollständig entladener Akkumulator 4 vorhanden ist. Auch entfällt ein lästiges Batteriewechseln im Bereich des Startknopfes an der Steuereinheit 10, wie bisher im Stand der Technik notwendig.

In einem besonderen Ausführungsbeispiel sind die verschiedenen Stufen der Betätigung der Starteinrichtung mit energieerzeugenden Mitteln verbunden, wie beispielsweise Piezoelementen. Dabei wird beim Erreichen der ersten Stufe ein erstes Energiesignal und beim Erreichen der zweiten Stufe ein zweites Energiesignal erzeugt. Diese Energiesignale können die gleiche Größe aufweisen, jedoch aufgrund der zeitlichen Unterschiede in der Erzeugung zu unterschiedlichen Steuerungs- und/oder Starterzwecken verwendet werden. Alternativ können die beiden energieerzeugenden Mittel jedoch auch unterschiedlich ausgestaltet sein, so dass auch unterschiedliche Größen der Energiesignale erzeugt werden. Mit diesen unterschiedlichen Energiesignalen sind dann unterschiedliche Ansteuerungsmöglichkeiten verbunden. Durch die unterschiedliche Ausgestaltung der energieerzeugenden Mittel kann auch vorgesehen sein, dass die nachfolgenden Stufen einen größeren mechanischen Widerstand aufweisen, so dass der Benutzer sich haptisch bewusst darüber wird, dass ein weiteres Signal erzeugt wird. Mit dieser Ausgestaltung ist jedoch auch möglich, manche Stufen gegen eine unbewusste Betätigung abzusichern, indem der mechanische Widerstand entsprechend hoch eingestellt wird.

In einer weiteren Ausführungsform ist die vorstehend beschriebene Starteinrichtung als Anbauteil ausgestaltet, die zu einem bereits bestehenden Antriebssystem hinzugefügt werden kann. Dabei ist lediglich die Übergabe der Steuer- bzw. Startinformationen mittels eines geeigneten Interfaces sicherzustellen.

## Patentansprüche

1. Mit Muskelkraft und/oder elektrisch betreibbares Fortbewegungsmittel, insbesondere Elektrofahrrad, umfassend:
- ein Antriebssystem mit einer Steuereinheit (10), einem elektrischen Antrieb (3) und einem Akkumulator (4),
- eine batterielose Starteinrichtung (11) zum Starten des Antriebssystems, wobei die Starteinrichtung (11) eingerichtet ist, bei einem Startwunsch für einen Systemstart Umgebungsenergie zur Erzeugung eines Startsignals zu verwenden,
- wobei die batterielose Starteinrichtung (11) einen mehrstufigen Systemstart mit wenigstens einer ersten Stufe und einer zweiten Stufe ermöglicht,
- wobei die batterielose Starteinrichtung (11) wenigstens einen ersten mechanischen Widerstand (21) und einen zweiten mechanischen Widerstand (22) umfasst, wobei der erste mechanische Widerstand (21) der ersten Stufe zugeordnet ist und der zweite mechanische Widerstand (22) der zweiten Stufe zugeordnet ist, und
- wobei in der ersten Stufe ein erstes Startsignal für eine erste Einrichtung erzeugbar ist und bei einer größeren Betätigungskraft der batterielosen Starteinrichtung (11) in der zweiten Stufe ein zweites Startsignal für eine zweite Einrichtung erzeugbar ist.

2. Fortbewegungsmittel nach Anspruch 1, **dadurch gekennzeichnet, dass** die Starteinrichtung (11) bei Erreichen der zweiten Stufe einen steigenden mechanischen Widerstand aufweist.

3. Fortbewegungsmittel nach Anspruch 1 oder 2, **dadurch gekennzeichnet, dass** die batterielose Starteinrichtung (11) einen Taster (19) umfasst, insbesondere mit einem Rückstellelement (17), um den Taster (19) in eine Ausgangsposition zurückzustellen.

4. Fortbewegungsmittel nach einem der vorhergehenden Ansprüche, **dadurch gekennzeichnet, dass** die batterielose Starteinrichtung (11) energieerzeugenden Mitteln aufweist, wobei bei der Betätigung der Starteinrichtung beim Erreichen der ersten Stufe ein erstes Energiesignal für das erste Startsignal und beim Erreichen der zweiten Stufe ein zweites Energiesignal für das zweite Startsignal erzeugt wird.

5. Fortbewegungsmittel nach Anspruch 4, **dadurch gekennzeichnet, dass** die energieerzeugenden Mittel unterschiedlich ausgestaltet sind, so dass unterschiedliche Größen der Energiesignale erzeugt werden.

6. Fortbewegungsmittel nach einem der vorhergehenden Ansprüche, **dadurch gekennzeichnet, dass** die batterielose Starteinrichtung (11) eine Spulenanordnung umfasst.

7. Fortbewegungsmittel nach Anspruch 5, **dadurch gekennzeichnet, dass** die Spulenanordnung einen ersten Ferritkern (15), wenigstens eine um den ersten Ferritkern (15) umwickelte erste Spule (23) und ein relativ zum ersten Ferritkern (15) bewegbares Permanentmagnetelement (12) umfasst.

8. Fortbewegungsmittel nach einem der Ansprüche 1 bis 5, **dadurch gekennzeichnet, dass** die batterielose Starteinrichtung (11) ein Piezoelement (30) umfasst.

9. Batterielose Starteinrichtung (11) zur Nutzung an einem Fortbewegungsmittel nach einem der Ansprüche 1 bis 8, wobei die Starteinrichtung dazu eingerichtet ist, bei einer Betätigung ein mehrstufiges Startsignal zu erzeugen,
wobei zur Erzeugung des mehrstufigen Startsignals Umgebungsenergie verwendet wird, und
wobei die batterielose Starteinrichtung (11) wenigstens einen ersten mechanischen Widerstand (21) und einen zweiten mechanischen Widerstand (22) umfasst, wobei der erste mechanische Widerstand (21) der ersten Stufe zugeordnet ist und der zweite mechanische Widerstand (22) der zweiten Stufe zugeordnet ist,
wobei für das mehrstufige Startsignal wenigstens ein erstes mittels einer ersten Einrichtung erzeugbares Startsignal und bei einer größeren Betätigungskraft der batterielosen Starteinrichtung (11) ein zweites mittels einer zweiten Einrichtung erzeugbares Startsignal erzeugbar ist.

10. Starteinrichtung nach Anspruch 9, **dadurch gekennzeichnet, dass** die Starteinrichtung (11) bei Erreichen der zweiten Stufe einen steigenden mechanischen Widerstand aufweist.

11. Starteinrichtung nach Anspruch 9 oder 10, **dadurch gekennzeichnet, dass** die Starteinrichtung (11) energieerzeugende Mittel aufweist, wobei bei der Betätigung der Starteinrichtung beim Erreichen der ersten Stufe ein erstes Energiesignal für das erste Startsignal und beim Erreichen der zweiten Stufe ein zweites Energiesignal für das zweite Startsignal erzeugt wird

12. Starteinrichtung nach Anspruch 11, **dadurch gekennzeichnet, dass** die energieerzeugenden Mittel unterschiedlich ausgestaltet sind, so dass unterschiedliche Größen der Energiesignale erzeugt werden.

13. Starteinrichtung nach einem der Ansprüche 9 bis 12, **dadurch gekennzeichnet, dass** die Starteinrichtung (11) eine Spulenanordnung umfasst, wobei insbesondere vorgesehen ist, dass die Spulenanordnung einen ersten Ferritkern (15), wenigstens eine um den ersten Ferritkern (15) umwickelte erste Spule (23) und ein relativ zum ersten Ferritkern (15) bewegbares Permanentmagnetelement (12) umfasst.

14. Starteinrichtung nach einem der Ansprüche 9 bis 12, **dadurch gekennzeichnet, dass** die Starteinrichtung ein Piezoelement (30) umfasst.

15. Starteinrichtung nach einem der Ansprüche 9 bis 14, **dadurch gekennzeichnet, dass** die Starteinrichtung (11), insbesondere der Taster, ein Rückstellelement (17), um den Taster (19) in eine Ausgangsposition zurückzustellen.

## Claims

1. Means of locomotion operable with muscle power and/or electrically, in particular electric bicycle comprising:
- a drive system with a control unit (10), an electric drive (3) and an accumulator (4),
- a batteryless starter device (11) for starting the drive system, wherein the starter device (11) is designed to use ambient energy for producing a starting signal in the event of a starting request for a system start,
- wherein the batteryless starter device (11) permits a multi-stage system start with at least one first stage and one second stage,
- wherein the batteryless starter device (11) comprises at least one first mechanical resistance (21) and one second mechanical resistance (22), wherein the first mechanical resistance (21) is assigned to the first stage and the second mechanical resistance (22) is assigned to the second stage, and
- wherein, in the first stage, a first starting signal for a first device can be produced and, upon a greater actuating force of the batteryless starter device (11), a second starting signal for a second device can be produced in the second stage.

2. Means of locomotion according to Claim 1, **characterized in that** the starter device (11) has an increasing mechanical resistance upon reaching the second stage.

3. Means of locomotion according to Claim 1 or 2, **characterized in that** the batteryless starter device (11) comprises a push button (19), in particular with a resetting element (17), in order to set back the push button (19) into an initial position.

4. Means of locomotion according to one of the preceding claims, **characterized in that** the batteryless starter device (11) has enegy-generating means, wherein, when the starter device is actuated, a first energy signal for the first starting signal is produced when the first stage is reached, and a second energy signal for the second starting signal is produced when the second stage is reached.

5. Means of locomotion according to Claim 4, **characterized in that** the energy-generating means are configured differently, and therefore different magnitudes of the energy signals are produced.

6. Means of locomotion according to one of the preceding claims, **characterized in that** the batteryless starter device (11) comprises a coil arrangement.

7. Means of locomotion according to Claim 5, **characterized in that** the coil arrangement comprises a first ferrite core (15), at least one first coil (23) wound around the first ferrite core (15), and a permanent magnet element (12) which is moveable relative to the first ferrite core (15).

8. Means of locomotion according to one of Claims 1 to 5, **characterized in that** the batteryless starter device (11) comprises a piezo element (30).

9. Batteryless starter device (11) for use on a means of locomotion according to one of Claims 1 to 8, wherein the starter device is designed to produce a multi-stage starting signal when actuated, wherein ambient energy is used for producing the multi-stage starting signal, and
wherein the batteryless starter device (11) comprises at least one first mechanical resistance (21) and one second mechanical resistance (22), wherein the first mechanical resistance (21) is assigned to the first stage and the second mechanical resistance (22) is assigned to the second stage, wherein at least one first starting signal which can be produced by means of a first device and, upon a greater actuating force of the batteryless starter device (11), a second starting signal which can be produced by means of a second device can be produced for the multi-stage starting signal.

10. Starter device according to Claim 9, **characterized in that** the starter device (11) has an increasing mechanical resistance upon reaching the second stage.

11. Starter device according to Claim 9 or 10, **characterized in that** the starter device (11) has energy-generating means, wherein, when the starter device is actuated, a first energy signal for the first starting signal is produced when the first stage is reached, and a second energy signal for the second starting signal is produced when the second stage is reached.

12. Starter device according to Claim 11, **characterized in that** the energy-generating means are configured differently, and therefore different magnitudes of the energy signals are produced.

13. Starter device according to one of Claims 9 to 12, **characterized in that** the starter device (11) comprises a coil arrangement, wherein it is provided in particular that the coil arrangement comprises a first ferrite core (15), at least one first coil (23) wound around the first ferrite core (15), and a permanent magnet element (12) which is moveable relative to the first ferrite core (15).

14. Starter device according to one of Claims 9 to 12, **characterized in that** the starter device comprises a piezo element (30).

15. Starter device according to one of Claims 9 to 14, **characterized in that** the starter device (11), in particular the push button, a resetting element (17) in order to set back the push button (19) into a starting position.

## Revendications

1. Moyen de déplacement pouvant être entraîné avec la force musculaire et/ou électriquement, notamment bicyclette électrique, comprenant :
- un système d'entraînement pourvu d'une unité de commande (10), un mécanisme d'entraînement électrique (3) et un accumulateur (4),
- un dispositif de démarrage (11) sans batterie destiné à faire démarrer le système d'entraînement, le dispositif de démarrage (11) étant conçu pour, lors d'un souhait de démarrage, utiliser pour un démarrage du système l'énergie environnante pour générer un signal de démarrage,
- le dispositif de démarrage (11) sans batterie rendant possible un démarrage du système en plusieurs paliers avec au moins un premier palier et un deuxième palier,
- le dispositif de démarrage (11) sans batterie comprenant au moins une première résistance mécanique (21) et une deuxième résistance mécanique (22), la première résistance mécanique (21) étant associée au premier palier et la deuxième résistance mécanique (22) étant associée au deuxième palier, et
- un premier signal de démarrage pour un premier dispositif pouvant être généré dans le premier palier et, en présence d'une force d'actionnement plus importante du dispositif de démarrage (11) sans batterie, un deuxième signal de démarrage pour un deuxième dispositif pouvant être généré dans le deuxième palier.

2. Moyen de déplacement selon la revendication 1, **caractérisé en ce que** le dispositif de démarrage (11) présente une résistance mécanique croissante lorsque le deuxième palier est atteint.

3. Moyen de déplacement selon la revendication 1 ou 2, **caractérisé en ce que** le dispositif de démarrage (11) sans batterie comprend un poussoir (19), notamment pourvu d'un élément de rappel (17) destiné à ramener le poussoir (19) dans une position initiale.

4. Moyen de déplacement selon l'une des revendications précédentes, **caractérisé en ce que** le dispositif de démarrage (11) sans batterie possède des moyens de génération d'énergie, un premier signal d'énergie pour le premier signal de démarrage étant généré lors de l'actionnement du dispositif de démarrage lorsque le premier palier est atteint et un deuxième signal d'énergie pour le deuxième signal de démarrage lorsque le deuxième palier est atteint.

5. Moyen de déplacement selon la revendication 4, **caractérisé en ce que** les moyens de génération d'énergie sont configurés différemment, de sorte que des grandeurs différentes des signaux d'énergie sont générées.

6. Moyen de déplacement selon l'une des revendications précédentes, **caractérisé en ce que** le dispositif de démarrage (11) sans batterie comprend un arrangement de bobines.

7. Moyen de déplacement selon la revendication 5, **caractérisé en ce que** l'arrangement de bobines comprend un premier noyau en ferrite (15), au moins une première bobine (23) enroulée autour du premier noyau en ferrite (15) et un élément à aimant permanent (12) mobile par rapport au premier noyau en ferrite (15).

8. Moyen de déplacement selon l'une des revendications 1 à 5, **caractérisé en ce que** le dispositif de démarrage (11) sans batterie comprend un élément piézoélectrique (30).

9. Dispositif de démarrage (11) sans batterie destiné à être utilisé sur un moyen de déplacement selon l'une des revendications 1 à 8, le dispositif de démarrage étant conçu pour, lors d'un actionnement, générer un signal de démarrage à plusieurs paliers, l'énergie environnante étant utilisée pour générer un signal de démarrage à plusieurs paliers,
le dispositif de démarrage (11) sans batterie comprenant au moins une première résistance mécanique (21) et une deuxième résistance mécanique (22), la première résistance mécanique (21) étant associée au premier palier et la deuxième résistance mécanique (22) étant associée au deuxième palier, et
au moins un premier signal de démarrage pouvant être généré au moyen d'un premier dispositif et, en présence d'une force d'actionnement plus importante du dispositif de démarrage (11) sans batterie, un deuxième signal de démarrage pouvant être généré au moyen d'un deuxième dispositif pour le signal de démarrage à plusieurs paliers.

10. Dispositif de démarrage selon la revendication 9, **caractérisé en ce que** le dispositif de démarrage (11) présente une résistance mécanique croissante lorsque le deuxième palier est atteint.

11. Dispositif de démarrage selon la revendication 9 ou 10, **caractérisé en ce que** le dispositif de démarrage (11) possède des moyens de génération d'énergie, un premier signal d'énergie pour le premier signal de démarrage étant généré lors de l'actionnement du dispositif de démarrage lorsque le premier palier est atteint et un deuxième signal d'énergie pour le deuxième signal de démarrage lorsque le deuxième palier est atteint.

12. Dispositif de démarrage selon la revendication 11, **caractérisé en ce que** les moyens de génération d'énergie sont configurés différemment, de sorte que des grandeurs différentes des signaux d'énergie sont générées.

13. Dispositif de démarrage selon l'une des revendications 9 à 12, **caractérisé en ce que** le dispositif de démarrage (11) comprend un arrangement de bobines, notamment **en ce qu'**il est prévu que l'arrangement de bobines comprend un premier noyau en ferrite (15), au moins une première bobine (23) enroulée autour du premier noyau en ferrite (15) et un élément à aimant permanent (12) mobile par rapport au premier noyau en ferrite (15).

14. Dispositif de démarrage selon l'une des revendications 9 à 12, **caractérisé en ce que** le dispositif de démarrage comprend un élément piézoélectrique (30).

15. Dispositif de démarrage selon l'une des revendications 9 à 14, **caractérisé en ce que** le dispositif de démarrage (11), notamment le poussoir, un élément de rappel (17) destiné à ramener le poussoir (19) dans une position initiale.
